# EUROPEAN PATENT APPLICATION

(11) **EP 1 864 570 A1**
(43) Date of publication of application: **12.12.2007**
(21) Application number: 07381043.4
(22) Date of filing: 21.05.2007
(51) Int. Cl.: A01K 1/01

(54) **Sanitary device with receptacle for domestic animal excrement**

(30) Priority: 09.06.2006 ES 200601557
(71) Applicant: Torres Salcedo, Evaristo, 08042 Barcelona (ES)
(72) Inventor: Torres Salcedo, Evaristo, 08042 Barcelona (ES)
(74) Representative: Esteban Perez-Serrano, Maria Isabel

(57) **Abstract**

The present invention consists of a sanitary device with a receptacle for domestic animals' excrement. The sanitary device consists essentially of a tray and a grid (1) on which a bed of special earth or silica gel is deposited on which the animal defecates. The earth or litter and the grid (1) enable the urine to pass to the lower zone of the tray and the solid matter is retained in the earth or gel. The device is characterised in that the base (3.1) of the tray is inclined towards a hole (3.2) under which there is a receptacle (4) consisting of an anti-return valve (4.1) and means for its emptying.

## Description

### OBJECT OF THE INVENTION

The present invention consists of a sanitary device with a receptacle for domestic animals' excrement.

The sanitary device consists essentially of a tray and a grid on which a bed of special earth or silica gel is deposited, and on which the animal urinates and defecates. The earth and the grid enable the urine to pass to the lower zone of the tray and the solid matter is retained in the earth or gel.
The device is characterised in that the base of the tray is inclined towards a low hole under which there is a device consisting of an anti return valve and means for emptying.

### BACKGROUND TO THE INVENTION

Sanitary devices are known in the state of the art used for domestic animals' excrement.

These devices normally consist of a tray the base of which is covered by a layer of earth on which the animal defecates. One of the most unpleasant activities to be carried out by pet owners is that of cleaning said earth. Periodically and due to the accumulation of the faeces it is necessary to change the used litter for fresh material.

This frequent changing of litter is expensive in both economic and ecological terms. The device enables the earth or litter to be reused for a longer period by separating liquid and solid waste matter, with the liquid excrement passing through the earth to a lower zone of the tray in which it is retained, so that the earth does not get damp, and the time between changes of the material can be extended.

The proposed device presents a system which makes it possible not only to maintain it in a reasonable condition for longer but it also has a system which prevents unpleasant odours generated by liquid excrement, and facilitates cleaning of the device and removal of urine.

### DESCRIPTION OF THE INVENTION

The present invention consists of a sanitary device with a receptacle for domestic animals' excrement.

The device consists of a tray in which there is a grid on which a special earth or litter or silica gel for domestic animal use is deposited.

The animal defecates on the earth on the grid. The system functions in such a way that the solid excrement is retained on the grid in the earth or earth and while the urine passes through the grid passing to the lower zone of the tray. The solid excrement will be eliminated when the earth is thrown away or any other method which separates the earth therefrom. The device is characterised in that the base of the tray is inclined towards a low hole under which there is a device consisting of an anti return valve which prevents odours from urine and which also has means for emptying the deposit.

### DESCRIPTION OF THE DRAWINGS

The present descriptive report is supplemented by a series of drawings illustrative of a preferred embodiment but not however, restricting the invention in any way.

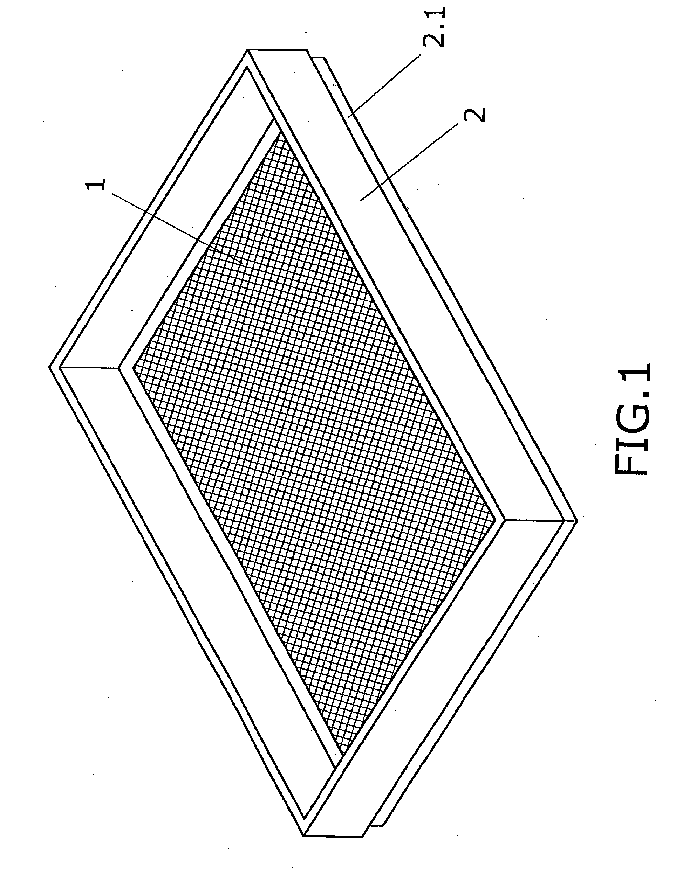

Figure 1 shows a perspective view of the tray and the grid.

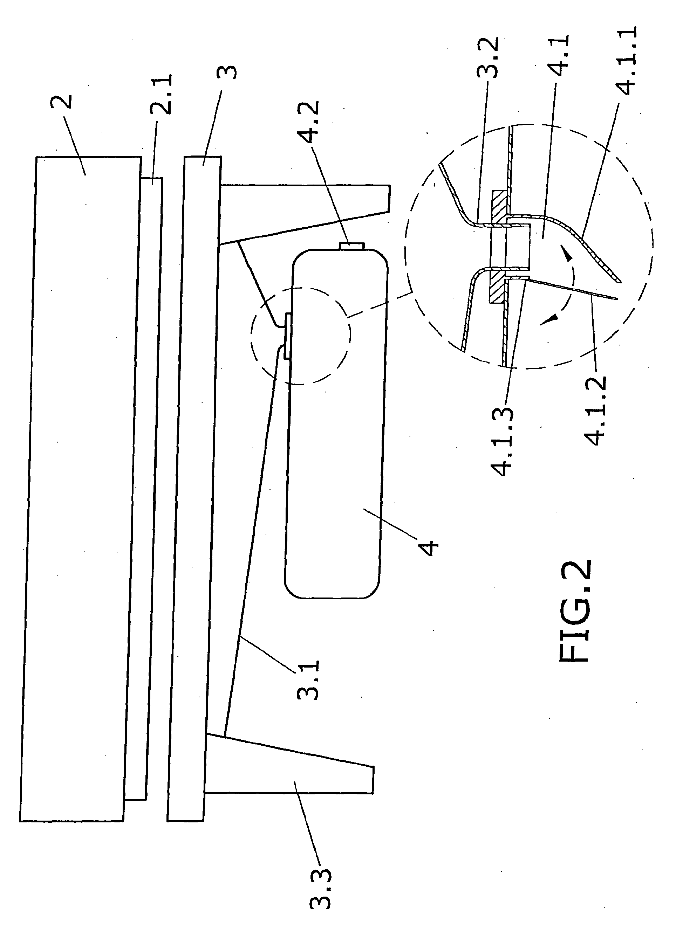

Figure 2 provides a lateral view of the device.

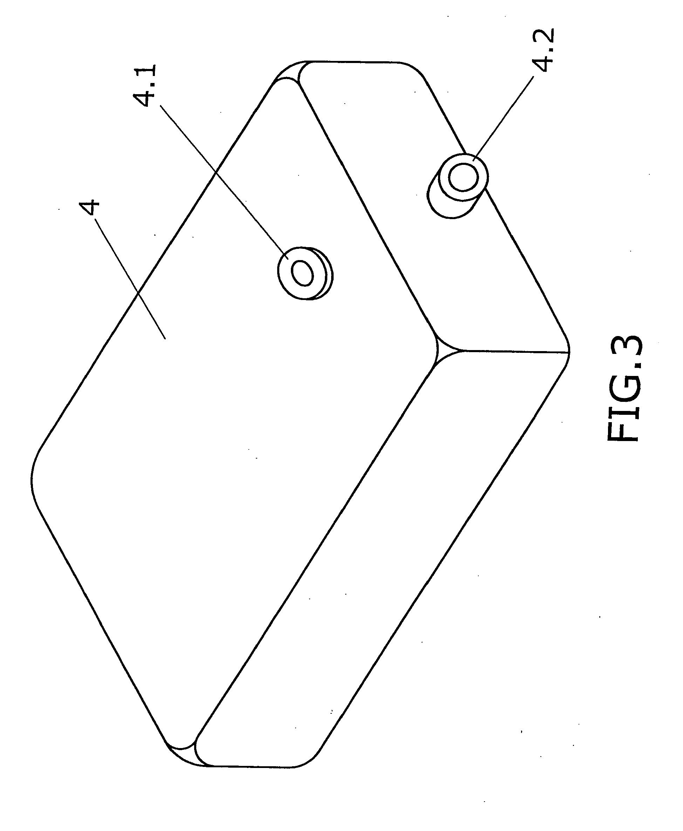

Figure 3 shows a perspective view of the device.

### PREFERRED EMBODIMENT OF THE INVENTION

The present invention consists of a sanitary device with a receptacle for domestic animals' excrement.

The sanitary device consists essentially of a tray and a grid (1) on which a bed of earth or litter (not represented) is deposited which enables the urine to pass to the lower area of the tray.

The grid may be metal or any other material provided that the granule size of the earth or silica gel is greater than the mesh of the grid (1) in order to ensure that the grid does not become clogged by the grains of earth or gel.

The device is characterised in that the base of the tray is inclined towards a hole (3.2) under which there is a receptacle consisting of an anti-return valve (4.1) and means for its emptying.

The anti-return valve (4.1) is designed to prevent odours rising from the receptacle.

In the preferred embodiment there are two superimposed trays (2, 3). The upper tray (2) is provided with a grid in its base (1). It is also provided with a perimeter recess (2.1) for fitting into the lower tray (3). The lower tray (3) is provided with an inclined base (3.1) directed towards a drainage hole (3.2). It is also provided with legs to give it elevation so that the receptacle (4) may be situated underneath it.

The emptying means of the receptacle (4) consist of a lower plug (4.2), thus facilitating cleaning of the device. The anti-return valve comprises an inclined section (4.1.1) closed by a flexible element (4.1.2), made for example from rubber, which may pivot round the point of attachment (4.1.3) to the receptacle (4)and which has a flexibility which leaves free passage of the urine subsequently closing, thus preventing return thereof, as well as the odours from the receptacle. The tray may be used independently or either it may be integrated as base of the tray for domestic animals.

The essential nature of this invention is not altered by variations in materials, form, shape and arrangement of the component elements which are described in a manner which is in no way restrictive but which is sufficient for an expert to proceed to its reproduction.

## Claims

1. Sanitary device with a receptacle for domestic animals' excrement, which consists of at least one tray and a grid (1) on which a bed of earth or silica gel is deposited, **characterised in that** the base of the tray has a floor inclining downwards towards a hole (3.2) under which a receptacle (4) is situated which consists of an anti-return device (4.1) and means for its emptying.

2. Sanitary device with a receptacle for domestic animals' excrement, according to claim 1, **characterised in that** the tray is provided with legs (3.3) which elevate it so that the receptacle (4) may be situated underneath.

3. Sanitary device with a receptacle for domestic animals' excrement, according to claim 1, **characterised in that** the means for emptying the receptacle (4) consist of a lower plug (4.2).

4. Sanitary device with a receptacle for domestic animals' excrement, according to claim 1, **characterised in that** the anti-return valve comprises an inclined section (4.1.1) closed by a flexible element (4.1.2), made for example from rubber, which may rotate round the point of attachment (4.1.3) to the receptacle (4)
